# EUROPEAN PATENT SPECIFICATION

(11) **EP 2 724 317 B1**
(45) Date of publication and mention of the grant of the patent: **29.08.2018**
(21) Application number: 12732712.0
(22) Date of filing: 14.06.2012
(51) Int. Cl.: G06T 7/10, G06F 3/0485, G06F 3/0484

(54) **SYSTEM AND METHOD FOR PROCESSING A MEDICAL IMAGE**
SYSTEM UND VERFAHREN ZUR VERARBEITUNG EINES MEDIZINISCHEN BILDES
SYSTÈME ET PROCÉDÉ POUR LE TRAITEMENT D'UNE IMAGE MÉDICALE

(30) Priority: 22.06.2011 EP 11171000
(43) Date of publication of application: 30.04.2014
(73) Proprietor: Koninklijke Philips N.V., 5656 AE Eindhoven (NL); Philips Intellectual Property & Standards GmbH, 20099 Hamburg (DE)
(72) Inventor: BUELOW, Thomas, NL-5656 AE Eindhoven (NL); BERGTHOLDT, Martin, NL-5656 AE Eindhoven (NL); MEETZ, Kirsten, NL-5656 AE Eindhoven (NL); CARLSEN, Ingwer-Curt, NL-5656 AE Eindhoven (NL); WIEMKER, Rafael, NL-5656 AE Eindhoven (NL)
(74) Representative: Steffen, Thomas
(86) International application number: PCT/IB2012/053007
(87) International publication number: WO 2012/176100

(56) References cited:
- EP-A1- 1 635 295
- DE-A1- 10 239 646
- US-A- 6 005 973
- US-A- 6 058 322
- US-A1- 2009 252 429

## Description

### FIELD OF THE INVENTION

The invention relates to a system and method for processing a medical image. The invention further relates to a workstation and imaging apparatus comprising the system, and a computer program product for causing a processor system to perform the method.

In the field of medical imaging, a medical image may comprise a region that is of particular interest to a clinician. For example, in a medical image of a breast acquired by Magnetic Resonance Imaging (MRI), an inspection of a lesion may allow the clinician to determine whether the lesion is malicious. Similarly, in a cardiac image acquired by Single Photon Emission Computed Tomography (SPECT), a region comprising the heart's left ventricle may allow the clinician to assess of how well the heart pumps blood to the body.

It may be desirable to separate the region of interest from its surroundings, e.g., to more easily observe its shape, size or changes therein over time. For that purpose, a segmentation method may be applied to the region of interest, yielding a segmentation result.

Segmentation methods may be manual or automatic. Manual segmentation methods are typically too time consuming to be feasible in routine clinical practice, as significant involvement from the clinician is needed. In contrast, automatic segmentation methods need less or no involvement from the clinician. Various automatic segmentation methods are known from the field of image processing, generally being constituted by a segmentation algorithm and thereto associated segmentation parameter value(s).

However, in order to fine-tune a segmentation result to a particular region of interest and/or clinical application, the clinician may still need to be involved in selecting the segmentation algorithm and/or segmentation parameter value(s).

### BACKGROUND OF THE INVENTION

A publication *"*Interaction in the segmentation of medical images: A survey" by Olabarriaga, S.D., et al., Medical Image Analysis 5, 2001, pp. 127-142, describes a general interactive segmentation method comprising a computational part, an interactive part and a user interface. The computational part corresponds to one or more pieces of program capable of generating a delineation of the object of interest given some parameters. The interactive part is responsible for mediating information between the user and the computational part. The actual communication between the computer and the user is done via the output and input devices controlled by the user interface.

The user interface allows a user to control the segmentation algorithm by controlling one or more parameters of the segmentation algorithm. Three types of user input may be used: (i) setting parameter values, e.g., by using a slider or similar technique, (ii) pictorial input directly on the image grid, e.g., by specifying points on the image grid for initializing the delineation, and (iii) choosing from pre-defined options in a menu.

In patent publication US 2009/0252429 is disclosed that a plurality of instances of an image segmentation technique are performed to an initial image thereby creating a plurality of processed images of the initial image. A first instance of the image segmentation technique uses a different parameter set than a second instance of the image segmentation technique. Each processed image is concurrently displayed together with the initial image. A selection of a processed image in the plurality of processed images is then received for further processing.

### SUMMARY OF THE INVENTION

A problem of the above user interface is that it is difficult and time-consuming for a clinician to control a segmentation method during routine clinical practice.

It would be advantageous to have a system or method for allowing a clinician to more easily control the segmentation method during routine clinical practice.

To address this concern, in a first aspect of the invention, a system according to claim 1 is provided.

In a further aspect of the invention, a workstation and an imaging apparatus is provided comprising the system of claim 1.

In a further aspect of the invention, a method of processing a medical image is provided, comprising establishing a region of interest in the medical image, applying a plurality of different segmentation methods to the region of interest for obtaining an associated plurality of segmentation results, simultaneously displaying the plurality of segmentation results to a user, and receiving from the user a selection command indicative of a selection of one of the plurality of segmentation results for establishing an associated one of the plurality of different segmentation methods as a selected segmentation method.

In a further aspect of the invention, a computer program product is provided comprising instructions for causing a processor system to perform the method set forth.

The aforementioned measures yield a system and method which provide, or are provided with, a region of interest in the medical image, and subsequently perform different segmentation methods in order to segment the region of interest in different ways. The plurality of different segmentation methods comprises at least one of: a plurality of different segmentation algorithms, and a segmentation algorithm configured by a plurality of different segmentation parameter values. As a result, a number of segmentation results are obtained, each corresponding to a segmentation of the region of interest. The segmentation results are displayed to the user simultaneously, thereby allowing the user to simultaneously perceive all of the segmentation results and to select one of the segmentation results to indicate a preferred segmentation method.

The measures according to the invention have the effect that the user can simultaneously view and compare the segmentation results, and select a preferred segmentation method based on said viewing and comparing of the segmentation results. The user therefore obtains, with one glance, an impression of the segmentation results provided by different segmentation methods for the particular region of interest, and can select the preferred segmentation method based on his or her impression of these results.

The invention is partially based on the recognition that the suitability of a segmentation result, and thus of the associated segmentation method, depends on the clinical application the user is currently addressing. It can differ depending on whether, e.g., a screenshot for reporting should be generated that shows a contoured tumor, whether a segmentation result is needed for further processing or feature extraction, or whether a therapy, e.g., a surgical excision of a tumor, is being planned based on the segmentation result. For example, in the latter case, a larger margin around the tumor might be required.

For a clinical user, it is difficult to determine which segmentation algorithm and which segmentation parameter values should be used in order to obtain the desired segmentation result. Parameter optimization in a trial-and-error scheme can be very frustrating when the meaning of the different segmentation parameters is of technical nature and cannot be described in clinical terms. In particular, it is difficult for the clinician to predict how changes in parameters will affect the segmentation result. However, the clinical user is typically able to determine whether a particular segmentation method is suitable for the clinical application by seeing the segmentation result. The measures according to the invention provide the user with simultaneous access to the segmentation results of a number of different segmentation methods, without the need for the user to be knowledgeable about the technicalities of the segmentation algorithm or the segmentation parameter values.

Optionally, the visualization means is arranged for displaying the plurality of segmentation results to the user as one of: a grid, a carousel. The segmentation results are therefore simultaneously displayed in a clearly structured and well arranged form to the user, allowing the user to intuitively perceive and compare the segmentation results.

Optionally, the segmentation means is arranged for, in dependence on the selected segmentation method, applying a further plurality of different segmentation methods to the region of interest for obtaining an associated further plurality of segmentation results, the visualization means is arranged for simultaneously displaying the further plurality of segmentation results to the user, and the user input is arranged for receiving from the user a further selection command indicative of a further selection of one of the further plurality of segmentation results for establishing an associated one of the further plurality of different segmentation methods as a further selected segmentation method.

After the user selects the preferred segmentation method, the preferred segmentation method is used in obtaining a further number of segmentation results from a further number of different segmentation methods. Thus, the selection of the preferred segmentation method affects the further number of segmentation results being displayed. Said segmentation results are displayed to the user simultaneously, thereby allowing the user to simultaneously perceive all of the further segmentation results and to select at least one of the further segmentation results to indicate a further preferred segmentation method.

The above measures provide an iterative process in which the user selects a first, e.g., an initial, preferred segmentation method, the system then obtains a further number of segmentation results using said selection, and the user then selects a second, e.g., a final, preferred segmentation method at the hand of the further number of segmentation results. Advantageously, said iterative process is better suited for routine clinical practice than an entirely iterative process, which is very time-consuming and confusing to a clinician, or an entirely non-iterative process, in which the number of segmentation results that are displayed simultaneously needs to be limited to avoid confusing the clinician. Advantageously, the user may be provided with a large choice of segmentation methods, without having to view and compare all of the segmentation results simultaneously.

Optionally, the selected segmentation method is a segmentation algorithm configured by a segmentation parameter value, and the further plurality of different segmentation methods is constituted by the segmentation algorithm being configured by a plurality of different segmentation parameter values. After selection of a preferred segmentation method, the user is provided with a further number of segmentation results that correspond to the same segmentation algorithm of the preferred segmentation method, but with each having a different segmentation parameter value. Advantageously, the different segmentation parameter values are refinements, e.g., slight modifications, of the segmentation parameter value of the selected segmentation method for allowing the user to easily refine the preferred segmentation method. Advantageously, the plurality of different segmentation parameter values comprises the segmentation parameter value of the preferred segmentation method for allowing the user maintain the preferred segmentation method in an unmodified form as the further preferred segmentation method.

Optionally, the segmentation means is arranged for adapting the plurality of different segmentation methods to a selection preference of the user by replacing a previously selected segmentation method within the plurality of different segmentation methods by a previously further selected segmentation method. Thus, during a next or future use of the system, the user is presented with the segmentation result obtained by the further selected segmentation method instead of the selected segmentation method that was initially part of the plurality of segmentation methods. Advantageously, after repeated use of the system, the plurality of segmentation methods is well adapted to the user's preference.

Optionally, the segmentation means is arranged for applying one of the plurality of segmentation methods to the region of interest for obtaining an associated preview segmentation result, and the visualization means is arranged for displaying the preview segmentation result to the user prior to simultaneously displaying the plurality of segmentation results. The system thus provides a preview segmentation result to the user which is obtained by one of the plurality of segmentation methods before simultaneously displaying the plurality of segmentation results. Advantageously, the user may decide which region of interest should be selected, or whether to select a region of interest at all, based on the preview segmentation result, and the plurality of segmentation results is only presented to the user once the region of interest is selected. Advantageously, the user is not overloaded with visual information when selecting the region of interest.

Optionally, the visualization means is arranged for displaying the preview segmentation result at a predefined position amongst the plurality of segmentation results. Advantageously, the user can intuitively recognize and/or easily find the preview segmentation results amongst the plurality of segmentation results.

Optionally, the segmentation means is arranged for establishing one of the plurality of segmentation methods as the preview segmentation method in dependence on a selection history of the user. Advantageously, the user is provided with a preview segmentation results obtained by a preferred segmentation method.

The visualization means is arranged for simultaneously displaying a plurality of views of the medical image comprising the plurality of segmentation results, and the user input is arranged for receiving from the user a view command indicative of a joint manipulation of the plurality of views, the joint manipulation comprising at least one of: panning, zooming, rotating, the plurality of views with respect to the medical image. The plurality of segmentation results are thus shown to the user in views of the medical image that may be jointly manipulated. As a consequence, the segmentation results are shown in the views in a comparable manner, without a need for the user to manipulate each of the views individually.

Optionally, the medical image is a three-dimensional [3D] medical image, the plurality of segmentation results is a plurality of 3D segmentation results, and the view command is indicative of rotating the plurality of views for obtaining an orthogonal configuration of the plurality of views. The user may thus easily obtain an orthogonal view of all of the segmentation results. Advantageously, when the initial views are transverse views of the medical image showing the segmentation results, the user may easily obtain coronal or sagittal views of the medical image, or vice versa.

Optionally, the user input is arranged for receiving from the user a display command for instructing the visualization means to display technical information on the different segmentation methods when displaying the plurality of segmentation results. Although normally the segmentation results are displayed to the user without displaying technical information on the segmentation methods, e.g., names of the segmentation algorithms or segmentation parameter values, the user can request said information to be displayed using the display command. Advantageously, the user is ordinarily not confused by terms of a technical nature, but may still request display of such terms.

Optionally, the user input is arranged for receiving from the user a manual segmentation command, and the segmentation means is arranged for applying a manually assisted segmentation method to the region of interest in dependence on the manual segmentation command.

It will be appreciated by those skilled in the art that two or more of the above-mentioned options, implementations, and/or aspects of the invention may be combined in any way deemed useful.

Modifications and variations of the imaging apparatus, the workstation, the method, and/or the computer program product, which correspond to the described modifications and variations of the aforementioned system, can be carried out by a person skilled in the art on the basis of the present description.

A person skilled in the art will appreciate that the system may be applied to multi-dimensional image data, e.g. to two-dimensional (2-D), three-dimensional (3-D) or four-dimensional (4-D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM). A dimension of the multi-dimensional image data may relate to time. For example, a four-dimensional image may comprise a time domain series of three-dimensional images.

The invention is defined in the independent claims. Advantageous embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a system according to the present invention;
Fig. 2 shows a method according to the present invention;
Fig. 3a shows a region of interest in a medical image;
Fig. 3b shows a segmentation result of the region of interest;
Fig. 4 shows the region of interest in the medical image and a pop-up window displaying a plurality of segmentation results of the region of interest as a grid;
Fig. 5 shows the grid displaying the plurality of segmentation results;
Fig. 6 shows a carousel displaying the plurality of segmentation results;
Fig. 7 shows an iterative method according to the present invention;
Fig. 8a shows a selection of one of the plurality of segmentation result;
Fig. 8b shows a further plurality of segmentation results;
Fig. 9a shows a view of the plurality of segmentation results;
Fig. 9b shows an orthogonal view of the plurality of segmentation results.

### DETAILED DESCRIPTION OF EMBODIMENTS

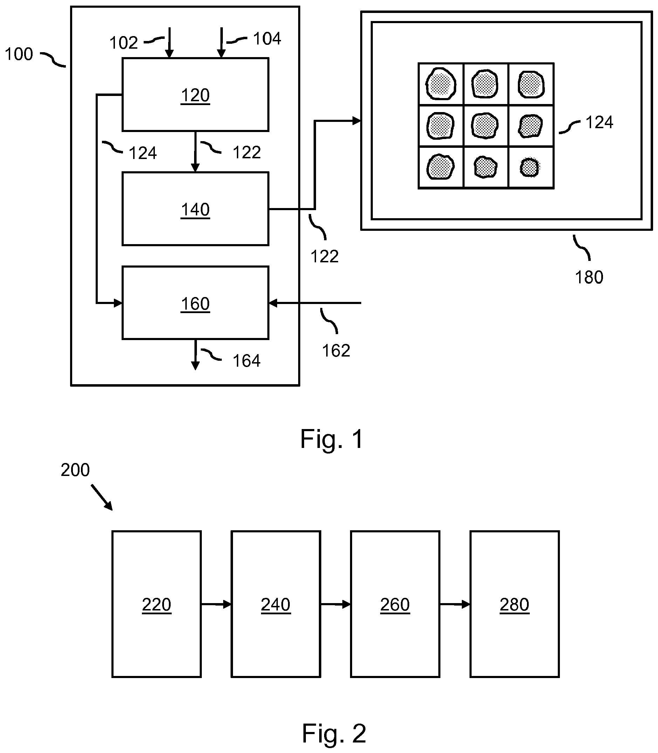

Fig. 1 shows a system 100 for processing a medical image 102. The system 100 comprises a segmentation means 120 for applying a plurality of different segmentation methods to a region of interest 104 in the medical image 102. The system 100 is arranged for establishing the region of interest 104 in the medical image 102, and for providing the medical image 102 and the region of interest 104 to the segmentation means 120. The segmentation means 120 is arranged for applying a plurality of different segmentation methods 124 to the region of interest 104 in the medical image 102, and as a result, provides a plurality of segmentation results 122 to a visualization means 140 of the system 100.

The visualization means 140 is arranged for simultaneously displaying the plurality of segmentation results 122 to a user. For that purpose, the visualization means 140 may be connected, or may be connectable, to a display 180. The display 180 may be an internal display, i.e., may be part of the system 100, or an external display. Fig. 1 shows the display 180 displaying a grid 124 showing the plurality of segmentation results 122.

The system 100 further comprises a user input 160 for receiving from the user a selection command 162 indicative of a selection of one of the plurality of segmentation results 122. Although not shown in Fig. 1, the user may provide the selection command 162 to the user input 160 by means of a user input device such as, e.g., a mouse, a keyboard or a touch-screen surface. For example, the user may provide the selection command 162 by clicking with the mouse on one of the plurality of segmentation results 122 shown by the grid 124. As a result of the selection by the user, the system 100 establishes one of the plurality of different segmentation methods 124, which is associated with the selected one of the plurality of segmentation results 122, as a selected segmentation method 164.

It is noted that the *segmentation means* is hardware or software arranged for applying a segmentation method to the region of interest in the medical image. Moreover, the term *segmentation method* refers to a segmentation algorithm and a thereto corresponding segmentation parameter value, the latter specifying a configuration, or an aspect of the configuration, of the segmentation algorithm. The segmentation algorithm may be any known segmentation algorithm from the field of image processing, and in particular, the field of medical image processing. For example, the segmentation algorithm may be a thresholding segmentation algorithm, and the segmentation parameter value may be a threshold value. Similarly, the segmentation algorithm may be a lambda-connected region-growing segmentation algorithm, and the segmentation parameter value may a lambda value. Thus, the term *different segmentation methods* refers to the segmentation methods having different segmentation algorithms and/or having different segmentation parameter values.

Fig. 2 shows a method 200 for processing the medical image. The method comprises establishing 220 a region of interest in the medical image, applying 240 a plurality of different segmentation methods to the region of interest for obtaining an associated plurality of segmentation results, simultaneously 260 displaying the plurality of segmentation results to a user, and receiving 280 from the user a selection command indicative of a selection of one of the plurality of segmentation results for establishing an associated one of the plurality of different segmentation methods as a selected segmentation method.

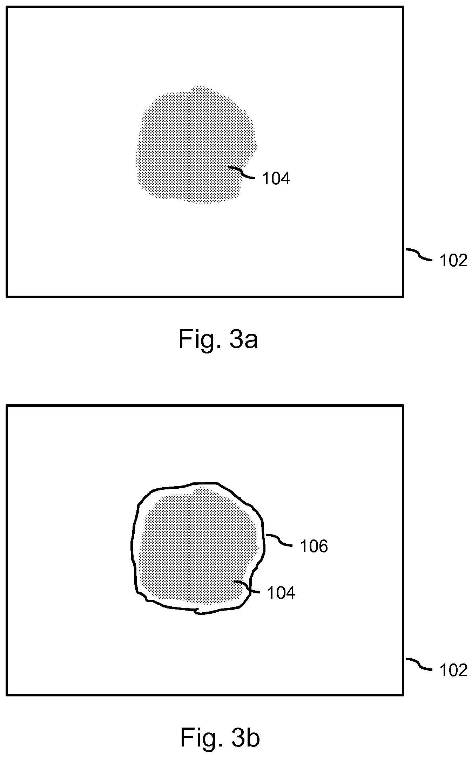

Operation of the system 100 and performing of the method 200 may be explained as follows. Fig. 3a shows a medical image 102 comprising a region of interest 104. The region of interest 104 may be a tissue, organ, or any other medical region of interest. For example, the region of interest 104 may be a lesion, i.e., an abnormal tissue, in the medical image. The region of interest 104 may be established in the medical image 102 in various ways. For example, establishing the region of interest 104 may comprise selecting the region of interest 104. The selecting may be manual, and may comprise the user selecting a part of the region of interest 104 by clicking with a mouse cursor on the region of interest 104, hovering with the mouse cursor over the region of interest 104, etc. The selecting may also be automatic, e.g., using a computer aided diagnosis algorithm or an automatic seed point selection algorithm as are known from the field of medical image processing. The selecting may also comprise the user manually selecting the region of interest 104 from a list of region of interests that are automatically suggested by the system 100. Establishing the region of interest 104 may also comprise receiving suitable data indicative of the region of interest 104 from an external source, the data comprising, e.g., coordinates of the region of interest 104. In this respect, it is noted that establishing the region of interest may comprise establishing a point or portion of the region of interest, e.g., selecting a point or portion of the region of interest. The segmentation means 120 may be arranged for applying the plurality of different segmentation methods 124 to the region of interest in dependence on the point or portion.

Fig. 3b shows an optional feature of the system 100 and method 200, wherein one of the plurality of segmentation methods is applied to the region of interest 104 for obtaining an associated preview segmentation result 106, and the preview segmentation result 106 is displayed to the user prior to simultaneously displaying the plurality of segmentation results. The user may obtain the preview segmentation result by initially selecting the region of interest 104, for example, by hovering with the mouse cursor over the region of interest 104. The one of the plurality of segmentation methods that is used for obtaining the preview segmentation result 106 may be a default segmentation method. In particular, said segmentation method may correspond to segmentation method being, on average, well suited for segmenting a region of interest, e.g., by having average, or commonly used, segmentation parameter values. Also, one of the plurality of segmentation methods may be established as the preview segmentation method in dependence on a selection history of the user. Thus, the preview segmentation method may be in general a frequently selected segmentation method, or a segmentation method that is frequently selected for the particular region of interest.

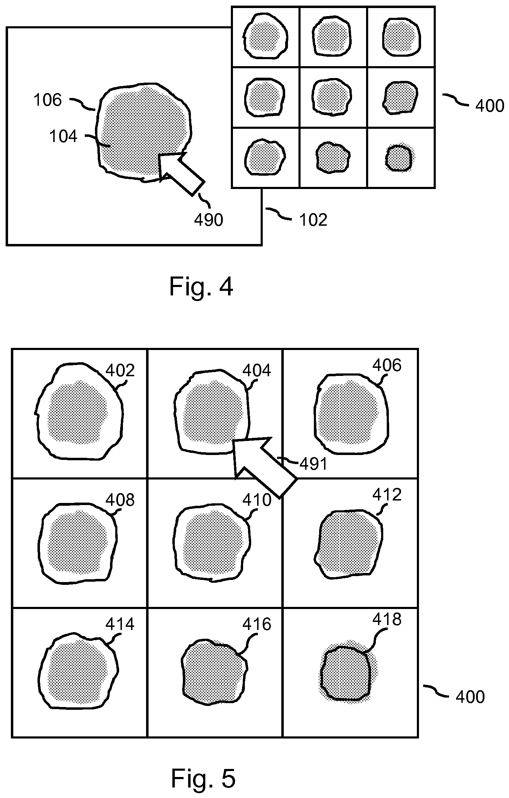

Fig. 4 shows a result of the user selecting the region of interest, e.g., by clicking with a mouse cursor 490 on the region of interest. As a result, a grid 400 is provided to the user that simultaneously displays a plurality of segmentation results to the user. The grid 400 may be provided in the form of a so-termed pop-up window, which still allows the user to view the medical image 102. In particular, the plurality of segmentation results may be shown in the form of thumbnails, i.e., being shown relatively small compared to the region of interest 104 in the medical image 102. Alternatively, the grid 400 may be presented next to the medical image 102, instead of the medical image 102, or in any other suitable manner.

Fig. 5 shows a larger view of the grid 400 previously shown in Fig. 4. The grid 400 comprises nine segmentation results 402-418 being simultaneously displayed by means of a 3x3 grid, with each tile of the grid showing the region of interest and one of the plurality of segmentation results. For showing the region of interest, each tile may show a cropped view of the medical image 102 that shows the region of interest and the one of the plurality of segmentation results. It will be appreciated, however, that the region of interest may not need to be shown. Instead, the grid 400 may solely display the plurality of segmentation results. Moreover, the segmentation results may be displayed as a contour, a mesh, a line, a transparently colored region, an opaquely colored region, etc.

The plurality of segmentation results 402-418 are shown in Fig. 5 to be different segmentation results, i.e., each segmentation result differs from the other. This may typically occur due to the associated segmentation methods being different. It will be appreciated, however, that different segmentation methods may in some cases obtain similar or identical segmentation results, e.g., due to the differences being not or less relevant for the particular region of interest. In this particular example, the different segmentation methods yield a plurality of segmentation results that vary between over-segmentation on the one hand, e.g., by including other tissue in the segmentation result, and under-segmentation on the other hand, e.g., by omitting parts of the region of interest in the segmentation result.

One of the plurality of segmentation results 402-418 may correspond to the preview segmentation result 106 as shown in Figs. 3b and 4. In this particular example, the middle one of the plurality of segmentation results 410 corresponds to the preview segmentation result 106. The preview segmentation result 106, 410 may always be shown at a predefined position amongst the plurality of segmentation results 402-418, e.g., a middle position or a top-left position. Moreover, the preview segmentation result 106, 410 is shown in Fig. 5 to correspond to a compromise between the over-segmentation of the top-left segmentation result 402 and the under-segmentation of the bottom-right segmentation result 418. This may be the result of the associated preview segmentation method being an average segmentation method, e.g., a compromise amongst the plurality of segmentation methods.

The user may select one of the plurality of segmentation results, e.g., by clicking with the mouse cursor 491 on the top-middle segmentation result 404. As a result, an associated one of the plurality of different segmentation methods is established as a selected segmentation method. Thus, by selecting the result of a particular segmentation method, the particular segmentation method is established as a selected segmentation method.

The grid 400 is shown in Fig. 4 to show the plurality of segmentation results 402-418 without showing technical information about the associated segmentation methods. However, although not shown in Fig. 4, technical information may be displayed as a result of the user specifically requesting display of such information. Said technical information may comprise a name of a segmentation algorithm or a segmentation parameter value being displayed besides or beneath one or each of the plurality of segmentation results 402-418.

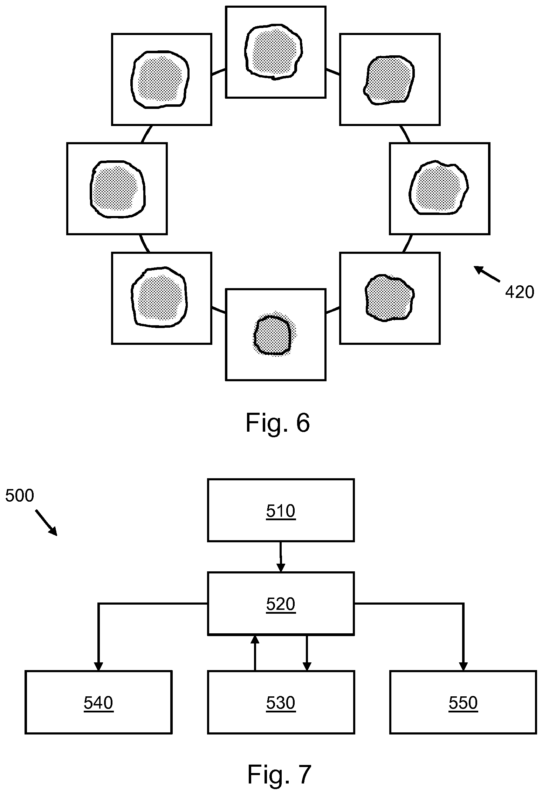

Fig. 6 shows an alternative way of simultaneously displaying a plurality of segmentation results to the user. Here, the plurality of segmentation results is displayed as a carousel 420, i.e., a circular arrangement of the plurality of segmentation results. It will be appreciated, however, that the plurality of segmentation results may be simultaneously displayed in any other suitable way. For example, the plurality of segmentation results may be simultaneously displayed in the form of horizontal or vertical side-by-side arrangement.

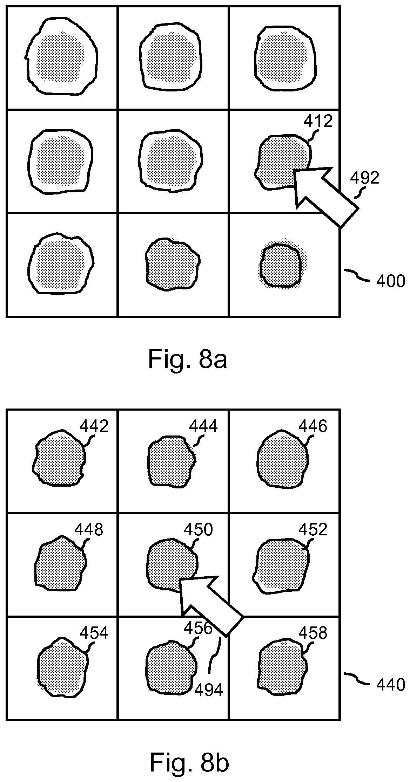

Fig. 7 shows a method 500, the method 500 being an extension of the method 200 of Fig. 2. The system of Fig. 1 may be configured for performing the steps of the method 500, i.e., the segmentation means, the visualization means and the user input may be arranged accordingly. Here, in a first step 510 "Selection", a region of interest is selected and a plurality of different segmentation methods is applied to the region of interest for obtaining an associated plurality of segmentation results. In a second step 520 "Inspection", the plurality of segmentation results are simultaneously displayed to the user and a selection command is received from the user indicative of a selection of one of the plurality of segmentation results for establishing an associated one of the plurality of different segmentation methods as a selected segmentation method. As such, the first step 510 and the second step 520 may correspond to the aforementioned configuration of the system 100 of Fig. 1 and method 200 of Fig. 2. The second step 420 is partially shown in Fig. 8a, where the plurality of segmentation results is simultaneously displayed to the user in the form of the aforementioned grid 400. The user may select a middle-right one of the plurality of segmentation results 412 by clicking with a mouse cursor 492 on the middle right segmentation result 412.

In a third step 530 "Refinement", a further plurality of different segmentation methods may be applied to the region of interest for obtaining an associated further plurality of segmentation results. After performing the third step, the second step 520 may be performed again with the further plurality of segmentation results being provided as an update of the previously displayed plurality of segmentation results. Thus, the further plurality of segmentation results is simultaneously displayed to the user, and a further selection command is received from the user indicative of a further selection of one of the further plurality of segmentation results for establishing an associated one of the further plurality of different segmentation methods as a further selected segmentation method. The result is partially shown in Fig. 8b, where the further plurality of segmentation results 442-458 are simultaneously displayed to the user in the form of a further grid 440. The third step 530 may serve for refining the segmentation result that is selected during the second step 420, e.g., the middle right segmentation result 412. For that purpose, the further plurality of segmentation results 442-458 may be constituted by modifications of the selected segmentation method of the second step 520. For example, when the selected segmentation method is a segmentation algorithm configured by a segmentation parameter value, the further plurality of different segmentation methods may be constituted by the segmentation algorithm being configured by a plurality of different segmentation parameters. As a result, a further plurality of segmentation results is obtained that typically differs from the selected segmentation result, yet shares certain characteristics with the selected segmentation result due to the segmentation algorithm being that of the selected segmentation result. Alternatively, the further plurality of different segmentation methods may be constituted by different segmentation algorithms, or by a combination of different segmentation algorithms and one or more segmentation algorithms having different segmentation parameter values.

Fig. 8b shows the further plurality of segmentation results 442-458 being obtained by minor modifications of the selected segmentation method. As a result, the further plurality of segmentation results 442-458 is relatively similar to the selected segmentation results 412 of the second step 520. Moreover, Fig. 8b shows a middle right one of the further plurality of segmentation results 452 being identical to the selected segmentation result 412 of Fig. 8a. This may be the result of one of the further plurality of segmentation methods being constituted by the selected segmentation method. Thus, during the third step 530, the user may compare the refinements of the selected segmentation result to the selected segmentation result itself, and may select either one of the refinements, or alternatively, the selected segmentation result a second time. The latter may be due the refinements being not an improvement over the selected segmentation result. Thus, the selected segmentation method may be maintained during the third step 530. In general, the third step 530 may be repeated for further, in an iterative manner, refining the segmentation result.

If the user is unsatisfied with the segmentation result obtained by the second step 520 and/or the refinements provided by the third step 530, the user may, in an optional fourth step 540, manually assist the segmentation. Therefore, the fourth step 540 may involve using an interactive segmentation method, in which user input is obtained for improving the segmentation result, in case none of the provided segmentation results is satisfactory.

Finally, once the user is satisfied with the segmentation result obtained by the second step 520 and/or the refinements provided by the third step 530 and/or the manually assisted segmentation provided by the fourth step 540, the user may in a fifth step 550 accept the segmentation result as a final segmentation result. This may comprise, e.g., clicking a displayed button, or may comprise omitting executing the third step 530 and the fourth step 540, thus implicitly accepting the segmentation result provided by the second step 520.

In an optional step of the method 500, the plurality of segmentation methods in the first step 510 is adapted to a previously final segmentation result, e.g., a final segmentation result of a previous execution of the method 500. For example, the segmentation method associated with the previous final segmentation result may be included in the plurality of segmentation methods of the first step 510 if this was not already the case, i.e., when the previous final segmentation result was obtained after refinement or manual assistance. Moreover, when the segmentation method associated with the previous final segmentation result is a modification of one of the plurality of segmentation methods of the first step 510, said method may be replaced by its modification. As such, a selection preference of the user may be taken into account, thereby allowing the user to obtain a satisfactory segmentation result without refinement or with needing less refinement.

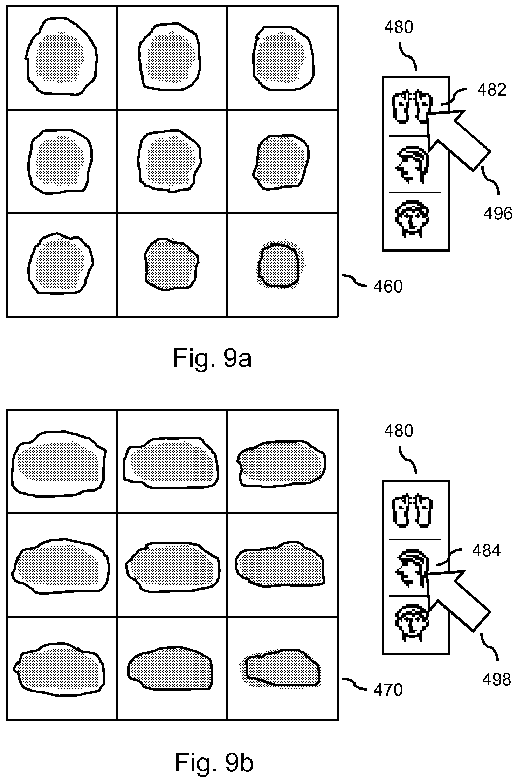

Fig. 9a shows a grid 460 for simultaneously displaying a plurality of segmentation results, with the grid 460 comprising a plurality of views of the medical image showing the plurality of segmentation results. Thus, the segmentation results are shown together with the region of interest and its surroundings within the medical image. Although not shown in Fig. 9a, each of the views may be individually manipulated, e.g., for panning, zooming, or rotating the view with respect the medical image. Furthermore, the plurality of views may also allow joint manipulation, e.g.., for jointly panning, zooming or rotating all of the views with respect to the medical image. In the specific case of Fig. 9a, the medical image is a three-dimensional [3D] medical image, and the plurality of segmentation results is a plurality of 3D segmentation results. For example, each of the plurality of segmentation results may be constituted by a 3D mesh. Moreover, the joint manipulation may be a rotating of all of the views by 90 degrees with respect to the medical image for obtaining an orthogonal configuration of the plurality of views. For that purpose, a view interface 480 is provided comprising buttons corresponding to, from top to bottom, a transverse, sagittal and coronal view configuration, respectively. The views shown in Fig. 9a may correspond to a transverse view configuration, as indicated by a selection of the transverse view configuration button 482 by the mouse pointer 496. The user may select a sagittal view configuration by selecting with the mouse pointer 498 the sagittal view button 484. As a consequence, each of the views is rotated by 90 degrees with respect to the medical image, resulting in a grid 470 showing an orthogonal configuration of the plurality of views.

It will be appreciated that the above system provides the user with access to the outcome of a bundle of different segmentation algorithms and/or segmentation parameter values without the need to be knowledgeable about the technicalities of neither algorithms nor segmentation parameter values. The user will not have to set or change any parameters explicitly. With a small number of, e.g., mouse-clicks the user can steer the system in a predictable fashion towards the desired segmentation of the region of interest.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing step of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a storage medium, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for processing a medical image (102), the system being arranged for establishing a region of interest (104) in the medical image, and the system comprising:
- segmentation means (120) for applying a plurality of different segmentation methods (124) to the region of interest for obtaining an associated plurality of segmentation results (122);
- visualization means (140) for simultaneously displaying, to a user, a plurality of views (460, 470) of the medical image (102) comprising the plurality of segmentation results; and
- a user input (160) for receiving from the user a selection command (162) indicative of a selection of one of the plurality of segmentation results for establishing an associated one of the plurality of different segmentation methods as a selected segmentation method (164);
- **characterized in that** the user input (160) is arranged for receiving from the user a view command indicative of a joint manipulation of the plurality of views, the joint manipulation comprising at least one of: panning, zooming, rotating, the plurality of views with respect to the medical image; and
- the visualization means (140) is arranged for carrying out the joint manipulation of the plurality of views based on the view command.

2. The system (100) according to claim 1, wherein the visualization means (140) is arranged for displaying the plurality of segmentation results (122) to the user as one of: a grid (400), a carousel (420).

3. The system (100) according to claim 1, wherein:
- the segmentation means (120) is arranged for, in dependence on the selected segmentation method (164), applying a further plurality of different segmentation methods to the region of interest (104) for obtaining an associated further plurality of segmentation results;
- the visualization means (140) is arranged for simultaneously displaying the further plurality of segmentation results to the user; and
- the user input (160) is arranged for receiving from the user a further selection command indicative of a further selection of one of the further plurality of segmentation results for establishing an associated one of the further plurality of different segmentation methods as a further selected segmentation method.

4. The system (100) according to claim 3, wherein the selected segmentation method (162) is a segmentation algorithm configured by a segmentation parameter value, and wherein the further plurality of different segmentation methods is constituted by the segmentation algorithm being configured by a plurality of different segmentation parameter values.

5. The system (100) according to claim 3, wherein the segmentation means (120) is arranged for adapting the plurality of different segmentation methods (124) to a selection preference of the user by replacing a previously selected segmentation method within the plurality of different segmentation methods by a previously further selected segmentation method.

6. The system (100) according to claim 1, wherein:
- the segmentation means (120) is arranged for applying one of the plurality of segmentation methods (124) to the region of interest (104) for obtaining an associated preview segmentation result; and
- the visualization means (140) is arranged for displaying the preview segmentation result to the user prior to simultaneously displaying the plurality of segmentation results (122).

7. The system (100) according to claim 6, wherein the visualization means (140) is arranged for displaying the preview segmentation result at a predefined position amongst the plurality of segmentation results (122).

8. The system (100) according to claim 6, wherein the segmentation means (120) is arranged for establishing one of the plurality of segmentation methods (124) as the preview segmentation method in dependence on a selection history of the user.

9. The system (100) according to claim 1, wherein the medical image (102) is a three-dimensional [3D] medical image, the plurality of segmentation results (122) is a plurality of 3D segmentation results, and the view command is indicative of rotating the plurality of views for obtaining an orthogonal configuration of the plurality of views (470).

10. The system (100) according to claim 1, wherein the user input (160) is arranged for receiving from the user a display command for instructing the visualization means (140) to display technical information on the different segmentation methods (124) when displaying the plurality of segmentation results (122).

11. A workstation comprising the system according to claim 1.

12. An imaging apparatus comprising the system according to claim 1.

13. A method (200) of processing a medical image, comprising:
- establishing (220) a region of interest in the medical image;
- applying (240) a plurality of different segmentation methods to the region of interest for obtaining an associated plurality of segmentation results;
- simultaneously (260) displaying, to a user, a plurality of views of the medical image comprising the plurality of segmentation results;
- receiving (280) from the user a selection command indicative of a selection of one of the plurality of segmentation results for establishing an associated one of the plurality of different segmentation methods as a selected segmentation method;
- **characterized by** receiving from the user a view command indicative of a joint manipulation of the plurality of views, the joint manipulation comprising at least one of: panning, zooming, rotating, the plurality of views with respect to the medical image, and carrying out the joint manipulation of the plurality of views based on the view command.

14. A computer program product comprising instructions for causing a processor system to perform the method according to claim 13.

## Patentansprüche

1. System (100) zur Verarbeitung eines medizinischen Bilds (102), wobei das System vorgesehen ist, um eine interessierende Region (104) in dem medizinischen Bild zu bestimmen, und das System Folgendes umfasst:
- Segmentierungsmittel (120) zum Anwenden einer Vielzahl von verschiedenen Segmentierungsverfahren (124) auf die interessierende Region, um eine zugehörige Vielzahl von Segmentierungsergebnissen (122) zu erhalten;
- Visualisierungsmittel (140) zum gleichzeitigen Anzeigen, für einen Benutzer, einer Vielzahl von Ansichten (460, 470) des medizinischen Bilds (102) umfassend die Vielzahl von Segmentierungsergebnissen; und
- einen Benutzereingang (160) zum Empfangen, von dem Benutzer, eines Auswahlbefehls (162), der eine Auswahl von einem der Vielzahl von Segmentierungsergebnissen angibt, um ein zugehöriges von der Vielzahl von verschiedenen Segmentierungsverfahren als ein ausgewähltes Segmentierungsverfahren (164) zu bestimmen;
**dadurch gekennzeichnet, dass**
- der Benutzereingang (160) dafür vorgesehen ist, von dem Benutzer einen Ansichtbefehl zu empfangen, der eine gemeinsame Manipulation der Vielzahl von Ansichten angibt, wobei die gemeinsame Manipulation mindestens eines von Schwenken, Zoomen, Drehen der Vielzahl von Ansichten in Bezug auf das medizinische Bild umfasst; und
- das Visualisierungsmittel (140) dafür vorgesehen ist, die gemeinsame Manipulation der Vielzahl von Ansichten basierend auf dem Ansichtbefehl durchzuführen.

2. System (100) nach Anspruch 1, wobei das Visualisierungsmittel (140) dafür vorgesehen ist, die Vielzahl von Segmentierungsergebnissen (122) für einen Benutzer als eines von einem Gitter (400) oder einem Karussell (420) anzuzeigen.

3. System (100) nach Anspruch 1, wobei:
- das Segmentierungsmittel (120) dafür vorgesehen ist, in Abhängigkeit von dem ausgewählten Segmentierungsverfahren (164) eine weitere Vielzahl von verschiedenen Segmentierungsverfahren auf die interessierende Region (104) anzuwenden, um eine zugehörige weitere Vielzahl von Segmentierungsergebnissen zu erhalten;
- das Visualisierungsmittel (140) vorgesehen ist, um gleichzeitig die weitere Vielzahl von Segmentierungsergebnissen für den Benutzer anzuzeigen; und
- der Benutzereingang (160) vorgesehen ist, um von dem Benutzer einen weiteren Auswahlbefehl zu empfangen, der eine weitere Auswahl von einem der weiteren Vielzahl von Segmentierungsergebnissen angibt, um ein zugehöriges von der weiteren Vielzahl von verschiedenen Segmentierungsverfahren als ein weiteres ausgewähltes Segmentierungsverfahren zu bestimmen.

4. System (100) nach Anspruch 3, wobei das ausgewählte Segmentierungsverfahren (162) ein durch einen Segmentierungsparameterwert konfigurierter Segmentierungsalgorithmus ist, und wobei die weitere Vielzahl von verschiedenen Segmentierungsverfahren dadurch gebildet wird, dass der Segmentierungsalgorithmus durch eine Vielzahl von verschiedenen Segmentierungsparameterwerten konfiguriert wird.

5. System (100) nach Anspruch 3, wobei das Segmentierungsmittel (120) vorgesehen ist, um die Vielzahl von verschiedenen Segmentierungsverfahren (124) an eine Auswahlpräferenz des Benutzers anzupassen, indem ein zuvor ausgewähltes Segmentierungsverfahren innerhalb der Vielzahl von verschiedenen Segmentierungsverfahren durch ein zuvor weiter ausgewähltes Segmentierungsverfahren ersetzt wird.

6. System (100) nach Anspruch 1, wobei:
- das Segmentierungsmittel (120) vorgesehen ist, um eines der Vielzahl von Segmentierungsverfahren (124) auf die interessierende Region (104) anzuwenden, um ein zugehöriges Vorschau-Segmentierungsergebnis zu erhalten; und
- das Visualisierungsmittel (140) vorgesehen ist, um das Vorschau-Segmentierungsergebnis einem Benutzer anzuzeigen, bevor es gleichzeitig die Vielzahl von Segmentierungsergebnissen (122) anzeigt.

7. System (100) nach Anspruch 6, wobei das Visualisierungsmittel (140) vorgesehen ist, um das Vorschau-Segmentierungsergebnis an einer vordefinierten Position unter der Vielzahl von Segmentierungsergebnissen (122) anzuzeigen.

8. System (100) nach Anspruch 6, wobei das Segmentierungsmittel (120) vorgesehen ist, um in Abhängigkeit von einem Auswahlverlauf des Benutzers eines der Vielzahl von Segmentierungsverfahren (124) als das Vorschau-Segmentierungsverfahren zu bestimmen.

9. System (100) nach Anspruch 1, wobei das medizinische Bild (102) ein dreidimensionales (3D) medizinisches Bild ist, wobei die Vielzahl von Segmentierungsergebnissen (122) eine Vielzahl von 3D-Segmentierungsergebnissen ist und der Ansichtbefehl eine Drehung der Vielzahl von Ansichten angibt, um eine orthogonale Konfiguration der Vielzahl von Ansichten (470) zu erhalten.

10. System (100) nach Anspruch 1, wobei der Benutzereingang (160) vorgesehen ist, um von dem Benutzer einen Anzeigebefehl zu empfangen, um das Visualisierungsmittel (140) anzuweisen, technische Informationen zu den verschiedenen Segmentierungsverfahren (124) anzuzeigen, wenn die Vielzahl von Segmentierungsergebnissen (122) angezeigt wird.

11. Workstation umfassend das System nach Anspruch 1.

12. Bildgebungsgerät umfassend das System nach Anspruch 1.

13. Verfahren (200) zur Verarbeitung eines medizinischen Bilds, umfassend:
- Bestimmen (220) einer interessierenden Region in dem medizinischen Bild;
- Anwenden (240) einer Vielzahl von verschiedenen Segmentierungsverfahren auf die interessierende Region, um eine zugehörige Vielzahl von Segmentierungsergebnissen zu erhalten;
- gleichzeitiges Anzeigen (260), für einen Benutzer, einer Vielzahl von Ansichten des medizinischen Bilds umfassend die Vielzahl von Segmentierungsergebnissen;
- Empfangen (280), von dem Benutzer, eines Auswahlbefehls, der eine Auswahl von einem der Vielzahl von Segmentierungsergebnissen angibt, um ein zugehöriges von der Vielzahl von verschiedenen Segmentierungsverfahren als ein ausgewähltes Segmentierungsverfahren zu bestimmen;
**gekennzeichnet durch**
- Empfangen, von dem Benutzer, eines Ansichtbefehls, der eine gemeinsame Manipulation der Vielzahl von Ansichten angibt, wobei die gemeinsame Manipulation mindestens eines von Schwenken, Zoomen, Drehen der Vielzahl von Ansichten in Bezug auf das medizinische Bild umfasst; und
- Durchführen der gemeinsamen Manipulation der Vielzahl von Ansichten basierend auf dem Ansichtbefehl.

14. Computerprogrammprodukt umfassend Anweisungen zum Veranlassen eines Prozessorsystems, das Verfahren nach Anspruch 13 durchzuführen.

## Revendications

1. Système (100) pour traiter une image médicale (102), le système étant agencé pour établir une région d'intérêt (104) dans l'image médicale, et le système comprenant :
- un moyen de segmentation (120) pour appliquer une pluralité de différents procédés de segmentation (124) à la région d'intérêt pour obtenir une pluralité associée de résultats de segmentation (122) ;
- un moyen de visualisation (140) pour afficher simultanément, à l'attention d'un utilisateur, une pluralité de vues (460, 470) de l'image médicale (102) comprenant la pluralité de résultats de segmentation ; et
- une entrée utilisateur (160) pour recevoir depuis l'utilisateur une instruction de sélection (162) indiquant une sélection d'un de la pluralité de résultats de segmentation pour établir un procédé associé de la pluralité de différents procédés de segmentation en tant que procédé de segmentation sélectionné (164) ;
- **caractérisé en ce que** l'entrée utilisateur (160) est agencée pour recevoir depuis l'utilisateur une instruction de vue indiquant une manipulation d'assemblage de la pluralité de vues, la manipulation d'assemblage comprenant au moins l'un parmi : un panoramique, un zoom, une rotation de la pluralité de vues par rapport à l'image médicale ; et
- le moyen de visualisation (140) est agencé pour réaliser la manipulation d'assemblage de la pluralité de vues sur la base de l'instruction de vue.

2. Système (100) selon la revendication 1, dans lequel le moyen de visualisation (140) est agencé pour afficher la pluralité de résultats de segmentation (122) à l'attention de l'utilisateur en tant que l'un parmi une grille (400), un carrousel (420).

3. Système (100) selon la revendication 1, dans lequel :
- le moyen de segmentation (120) est agencé pour, en fonction du procédé de segmentation sélectionné (164), appliquer une autre pluralité de différents procédés de segmentation à la région d'intérêt (104) pour obtenir une autre pluralité associée de résultats de segmentation ;
- le moyen de visualisation (140) est agencé pour afficher simultanément l'autre pluralité de résultats de segmentation à l'attention de l'utilisateur ; et
- l'entrée utilisateur (160) est agencée pour recevoir depuis l'utilisateur une autre instruction de sélection indiquant une autre sélection d'un de l'autre pluralité de résultats de segmentation pour établir un procédé associé de l'autre pluralité de différents procédés de segmentation en tant qu'autre procédé de segmentation sélectionné.

4. Système (100) selon la revendication 3, dans lequel le procédé de segmentation sélectionné (162) est un algorithme de segmentation configuré par une valeur de paramètre de segmentation, et dans lequel l'autre pluralité de différents procédés de segmentation est constituée par l'algorithme de segmentation qui est configuré par une pluralité de différentes valeurs de paramètre de segmentation.

5. Système (100) selon la revendication 3, dans lequel le moyen de segmentation (120) est agencé pour adapter la pluralité de différents procédés de segmentation (124) à une préférence de sélection de l'utilisateur en remplaçant un procédé de segmentation préalablement sélectionné dans la pluralité de différents procédés de segmentation par un autre procédé de segmentation préalablement sélectionné.

6. Système (100) selon la revendication 1, dans lequel :
- le moyen de segmentation (120) est agencé pour appliquer l'un de la pluralité de procédés de segmentations (124) à la région d'intérêt (104) pour obtenir un résultat de segmentation de prévisualisation associé ; et
- le moyen de visualisation (140) est agencé pour afficher le résultat de segmentation de prévisualisation à l'utilisateur avant d'afficher simultanément la pluralité de résultats de segmentation (122).

7. Système (100) selon la revendication 6, dans lequel le moyen de visualisation (140) est agencé pour afficher le résultat de segmentation de prévisualisation dans une position prédéfinie parmi la pluralité de résultats de segmentation (122).

8. Système (100) selon la revendication 6, dans lequel le moyen de segmentation (120) est agencé pour établir l'un de la pluralité de procédés de segmentation (124) en tant que procédé de segmentation de prévisualisation en fonction d'un historique de sélection de l'utilisateur.

9. Système (100) selon la revendication 1, dans lequel l'image médicale (102) est une image médicale en trois dimensions [3D], la pluralité de résultats de segmentation (122) est une pluralité de résultats de segmentation en 3D, et l'instruction de vue indique la rotation de la pluralité de vues pour obtenir une configuration orthogonale de la pluralité de vues (470).

10. Système (100) selon la revendication 1, dans lequel l'entrée utilisateur (160) est agencée pour recevoir depuis l'utilisateur une instruction d'affichage pour donner au moyen de visualisation (140) l'ordre d'afficher des informations techniques sur les différents procédés de segmentation (124) lors de l'affichage de la pluralité de résultats de segmentation (122).

11. Poste de travail comprenant le système selon la revendication 1.

12. Appareil d'imagerie comprenant le système selon la revendication 1.

13. Procédé (200) de traitement d'une image médicale, comprenant :
- l'établissement (220) d'une région d'intérêt dans l'image médicale ;
- l'application (240) d'une pluralité de différents procédés de segmentation à la région d'intérêt pour obtenir une pluralité associée de résultats de segmentation ;
- l'affichage simultané (260), à l'attention de l'utilisateur, d'une pluralité de vues de l'image médicale comprenant la pluralité de résultats de segmentation ;
- la réception (280) depuis l'utilisateur d'une instruction de sélection indiquant une sélection d'un de la pluralité de résultats de segmentation pour établir un procédé associé de la pluralité de différents procédés de segmentation en tant que procédé de segmentation sélectionné ;
- **caractérisé par** la réception depuis l'utilisateur d'une instruction de vue indiquant une manipulation d'assemblage de la pluralité de vues, la manipulation d'assemblage comprenant au moins l'un parmi : un panoramique, un zoom, une rotation de la pluralité de vues par rapport à l'image médicale, et la réalisation de la manipulation d'assemblage de la pluralité de vues sur la base de l'instruction de vue.

14. Produit de programme informatique comprenant des instructions pour amener un système processeur à effectuer le procédé selon la revendication 13.
